# EUROPÄISCHE PATENTSCHRIFT

(11) **EP 1 214 697 B1**
(45) Veröffentlichungstag und Bekanntmachung des Hinweises auf die Patenterteilung: **21.04.2004**
(21) Anmeldenummer: 00963961.8
(22) Anmeldetag: 05.09.2000
(51) Int. Cl.: G08G 1/09, H04H 1/00

(54) **VERFAHREN ZUR CODIERUNG UND DECODIERUNG VON OBJEKTEN MIT BEZUG AUF EIN VERKEHRSWEGENETZ**
METHOD FOR ENCODING AND DECODING OBJECTS WITH REFERENCE TO A ROAD NETWORK
PROCEDE DE CODAGE ET DE DECODAGE D'OBJETS EN REFERENCE A UN RESEAU ROUTIER

(30) Priorität: 07.09.1999 DE 19942522
(43) Veröffentlichungstag der Anmeldung: 19.06.2002
(73) Patentinhaber: ROBERT BOSCH GMBH, 70442 Stuttgart (DE)
(72) Erfinder: PETZOLD, Bernd, 31234 Edemissen (DE); HESSING, Bernd, 31188 Holle (DE); HAHLWEG, Cornelius, 31139 Hildesheim (DE); DRAEGER, Gerd, 38102 Braunschweig (DE); KERSKEN, Ulrich, 31199 Diekholzen (DE); KREFT, Peter, 30539 Hannover (DE); MARTIN, Jan, 63179 Obertshausen (DE)
(86) Internationale Anmeldenummer: PCT/DE2000/003056
(87) Internationale Veröffentlichungsnummer: WO 2001/018768

(56) Entgegenhaltungen:
- EP-A- 0 300 205
- EP-A- 0 725 505
- DE-A- 19 750 786
- DE-C- 19 502 360

## Beschreibung

Die Erfindung betrifft Verfahren zur Codierung und Decodierung von Objekten mit Bezug auf ein Verkehrswegenetz, wobei die codierten Informationen auch mit Hilfe von Datenbanken decodierbar sind, die von einer bei der Codierung benutzten Datenbank abweichen.

In Anwendungen der Verkehrstelematik, in denen ortsbezogene Daten zwischen einem Sender und einem Empfänger ausgetauscht werden sollen, werden Verfahren zur Ortsreferenzierung - auch Ortscodierung genannt - benötigt. Es werden Verfahren angewandt, welche die Ortsbezüge der zu sendenden Daten in der Datenbank des Senders beschreiben und Verfahren, die empfängerseitig die Ortsbezüge der gesendeten Daten auswerten. Die Auswertung beinhaltet die Interpretation der Ortsbezüge und deren Abbildung auf die Datenbank des Empfängers. Die Beschreibung der Ortsbezüge muß so erfolgen, daß eine korrekte Abbildung der Objekte durch Wiedererkennen der Ortsbezüge in der Empfängerdatenbank möglich ist.

Bekannt ist, daß u.a. für verschiedene Anwendungen der Verkehrstelematik (z.B. TMC, GATS) eine Beschreibungsform für Ortsbezüge (wird auch als Ortscodierung bezeichnet) standardisiert worden ist. Bei diesen Anwendungen wird in der Regel vorausgesetzt, daß die beschriebenen Orte in den Datenbanken sowohl des Senders als auch des Empfängers vorhanden sind und die gleiche Ortscodierung aufweisen. Bei Abweichungen ist ein Abgleich der Datenbanken erforderlich.

Es sind Verfahren für die Referenzierung von Elementen aus einer digitalen Karte bekannt, die bezüglich der Ortscodierung lediglich ähnliche Datenbanken bzw. digitale Karten ähnlicher Digitalisierung voraussetzen. Die Beschreibung der Ortsbezüge erfolgt anhand geographischer Ortskoordinaten und weiterer beschreibender Merkmale. Weiterhin werden für Straßenkreuzungen als Elemente der digitalen Karte bestimmte Regeln definiert, welche die zu sendenden Ortskoordinaten und Merkmale bestimmen (DE 197 50 786 A1).

Aus EP 0 725 505 ist ein Rund Funk emspfänger zum Empfang sowie zur Verwaltung und Wiedergabe von digital Verkehrsmeldungen codierten bekannt.

Unter Objekten werden im vorliegenden Zusammenhang Informationen mit geographischem Bezug einschließlich multimedialer Objekte, wie beispielsweise Videosequenzen, stehende Bilder oder Klänge, und/oder Elemente einer digitalen Karte verstanden.

Mit der Erfindung sollen bereits existierende Objekte in der Datenbank des Empfängers adressiert, neue Objekte in die Datenbank des Empfängers eingebracht und bereits existierende Objekte modifiziert werden können.

Vor dem Hintergrund der Bestrebungen bezüglich einer universellen Schnittstelle zwischen Datenbanken unterschiedlicher Kartenanbieter, was natürlich auch für zu übertragende Teilnetze gilt, ergibt sich das Problem, die gegebenen Datensätze aufeinander abzubilden, d.h. eindeutige Zuordnungen der korrespondierenden Elemente zu finden.

Dies führt jedoch auf Grund der herstellerabhängigen Attributierung, sowohl bezüglich der Ortskoordinaten als auch der "heuristischen", beschreibenden Merkmale, zu Unterbestimmtheiten, die eine eindeutige Identifikation des codierten Objekts erschweren.

Der Aufbau von Datenbanken orientiert sich im allgemeinen an der Art der objektiv gegebenen Verknüpfung ihrer Objekte. Im Fall digitaler Karten ist dies eine Verknüpfung über die auf Grund von direkten Straßenverbindungen bestehenden Nachbarschaftsbeziehungen.

Mathematisch ausgedrückt bedeutet dies: da nur die Schnittmenge der in den beiden Datenbanken jeweils verwendeten Attribute für Vergleichszwecke herangezogen werden kann, kann die Anzahl der zur "Paar"-Identifikation heranzuziehenden Merkmale nicht größer sein als die Anzahl der Attribute, welche die Datenbank mit geringerer Merkmalsdichte pro Objekt liefert. Der Extremfall ist hierbei das Nichtvorhandensein eines korrespondierenden Objekts in der Vergleichsdatenbank, d.h. die Schnittmenge ist gleich Null.

Die Aufgabe der Erfindung besteht daher darin, jedes Objekt gezielt mit Attributen zu versehen, ohne auf die durch das Straßennetz gegebenen Beziehungen und damit auf die Struktur der Vergleichsdatenbank angewiesen zu sein.

Diese Aufgabe wird durch die unabhängigen Ansprüche 1, 8 und 10 gelöst.

Diese Aufgabe wird bei einer ersten Ausführungsform der Erfindung dadurch gelöst, daß die Objekte mit Beziehungen zu mindestens einem Relationsobjekt versehen werden, welches in Datenbanken, die zur Decodierung dienen, vorhanden ist, wobei sich die Beziehungen nicht primär aus dem Verkehrswegenetz ergeben.

Bei dem erfindungsgemäßen Verfahren können applikationsunabhängige Beschreibungen von Ortsbezügen zwischen Objekten erzeugt und interpretiert werden. Es ermöglicht den Austausch von ortsbezogenen Objekten zwischen einem Sender und einem Empfänger dieser Objekte unabhängig von der Ausführung der Ortsbezüge in der jeweiligen Datenbank. Dabei können die Datenbanken digitale Karten (z.B. von Navigationssystemen) gleicher oder unterschiedlicher Detaillierung und geographischer Bedeckung sein.

Bei dem erfindungsgemäßen Verfahren ist nicht ausgeschlossen, daß in einem Empfänger das codierte Objekt auch ohne Auswertung der Beziehungen zum Relationsobjekt eindeutig erkannt wird und durch diese Beziehungen das Relationsobjekt erkannt und beispielsweise in die Datenbank des Empfängers aufgenommen wird.

In vielen Fällen wird eine Decodierung bereits bei Angabe mindestens eines Relationsobjekts möglich sein. Um jedoch eine größere Vielfalt von Datenbanken und Objekten abzudecken, ist bei Weiterbildungen der Erfindung vorgesehen, daß Beziehungen parallel und/oder hierarchisch zu mehreren Relationsobjekten angegeben werden.

Bei einer ersten Ausgestaltung der Erfindung kann vorgesehen sein, daß die Beziehungen örtliche Angaben sind. Diese örtlichen Angaben können beispielsweise Koordinatendifferenzen sein oder aus Entfernung und Richtung bestehen.

Bei einer zweiten Ausgestaltung der Erfindung ist vorgesehen, daß die Beziehungen logische Merkmale, insbesondere Zugehörigkeiten, umfassen. Eine Zugehörigkeit besteht beispielsweise zwischen dem Parkplatz und der Haltestelle des öffentlichen Verkehrsmittels bei Park-and-Ride-Plätzen.

Vorzugsweise weist bei dem erfindungsgemäßen Verfahren die jeweils für ein Objekt (Referenzobjekt) codierte Information folgende Datenstruktur auf:
<Referenzobjekt>
<Relationsobjekt 1>
<Relationsobjekt 11>
<Relationsobjekt 12>
. . .
<Relationsobjekt 2>
. . .
<Relationsobjekt N>, wobei mindestens das Referenzobjekt und ein Relationsobjekt vorliegen.

Dabei wird vorzugsweise jeweils ein Objekt mit folgender Datenstruktur codiert:
<Referenz-/Relationsobjekt>:=
<Ebene>
<Objekttyp>
<Objektkoordinaten>
<Objektende>.

Dabei wird durch Ebene die Hierarchie-Ebene angegeben, beispielsweise in Bezug auf die oben angegebene Datenstruktur, ob es sich um das Relationsobjekt 1 oder 2 einerseits oder 11 oder 12 andererseits handelt.

Je nach Bedarf kann dabei die Datenstruktur eines Objekts durch weitere Informationen ergänzt werden, beispielsweise für die Ausgabe des Objekts.

Bei einer Weiterbildung des erfindungsgemäßen Verfahrens ist vorgesehen, daß mindestens den Daten des Referenzobjekts Daten zugeordnet sind, die eine Decodierungsregel kennzeichnen und daß den Daten der Relationsobjekte bei Bedarf jeweils Daten zugeordnet sind, die eine Decodierungsregel kennzeichnen. Ein solcher Bedarf liegt beispielsweise vor, wenn ein Relationsobjekt mit einer anderen Decodierungsregel decodiert werden soll als das Referenzobjekt.

Decodierungsregeln im Sinne dieser Weiterbildung können beispielsweise sein:
- Größe des Suchfensters,
- Objektschwerpunkt, das heißt, neben der Suchfunktion soll zusätzlich gewährleistet sein, daß die Koordinate sich innerhalb der Objektumrisse, beispielsweise eines Parkplatzes, befindet,
- exakte Position der Information, das heißt, neben der Suchfunktion soll diese einer exakten Position entsprechen, bei der definitionsgemäß das Lot auf das im Suchfenster gefundene Objekt gefällt werden soll, beispielsweise ein Stauanfang zwischen zwei Anschlußstellen einer Autobahn (gefundenes Objekt).

Für das Suchfenster gilt weiterhin, daß dessen Größe vom Objekttyp abhängen soll und vom Sender über das weitere Datenfeld in Stufen vorgegeben werden kann, um den maximalen Suchradius zu begrenzen. So kann beispielsweise bei entsprechender Quantisierung mit 3 Bit ein Radius von 10m bis 10 km codiert werden.

Bei einem Verfahren zur Decodierung ist erfindungsgemäß vorgesehen, daß das mindestens eine Relationsobjekt in der zur Decodierung dienenden Datenbank gesucht wird und daraufhin die Beziehung zum zu decodierenden Objekt ausgewertet wird. Dabei ist vorzugsweise vorgesehen, daß um die Orte der Relationsobjekte und der Referenzobjekte Suchfenster geöffnet werden.

Eine Weiterbildung des Verfahrens zur Decodierung besteht darin, daß das mindestens eine Relationsobjekt in mindestens einer weiteren Datenbank gesucht wird, wenn es in der an sich zur Decodierung dienenden Datenbank nicht gefunden wird. Damit ist die Heranziehung von insgesamt mehreren Datenbanken zur Decodierung möglich - beispielsweise der Datenbank eines TMC-Empfängers und der Datenbank (digitale Straßenkarte) eines Navigationsgerätes.

Da bei der Codierung von ortsbezogenen Objekten Positionsangaben (Ortskoordinaten) fast immer den Grundteil der Datenformate bilden, die Funktion der Koordinaten jedoch durchaus unterschiedlich sein kann, können bei der Decodierung im Empfänger Probleme auftreten.

Diese Probleme können bei einer zweiten Ausführungsform der Erfindung dadurch gelöst werden, daß die mindestens eine Positionsangabe mit einem Positionstypbezeichner versehen wird. Dabei kann beispielsweise vorgesehen sein, daß der Positionstypbezeichner angibt, ob die Positionsangabe eine exakte Position betrifft und/oder die Lage eines Suchraumes für eine Position oder ein Objekt angibt.

Als exakt wird in diesem Zusammenhang eine Position im Gegensatz zu einem Suchraum angesehen. Eine Position kann auch exakt sein und gleichzeitig die Lage eines Suchraumes angeben. Dies kann beispielsweise bei der Codierung eines Stauanfangs auf einer Autobahn vorkommen, wobei die Position durch Verwendung verschiedener Koordinatensysteme nicht auf der Autobahn liegt, die Autobahn durch Suche im Suchraum um die übertragene Position ermittelt wird und dann ein Lot auf die Autobahn gefällt wird, um auf den Stauanfang zu kommen.

Bei der Codierung von ortsbezogenen Objekten kann es durchaus vorkommen, daß ein Objekt mehrere Positionsangaben umfaßt, wozu im Rahmen der Erfindung vorgesehen werden kann, daß der Positionstypbezeichner für jeweils eine Positionsangabe oder daß der Positionstypbezeichner für mehrere Positionsangaben gilt.

Es ist ferner mit der Erfindung möglich, weitere Informationen zur Positionsangabe mit einer Weiterbildung dadurch zu codieren, daß der Positionstypbezeichner mindestens ein Attribut aufweist, das weitere Eigenschaften der Positionsangabe bezeichnet. Dabei kann unter anderem vorgesehen sein, daß die weiteren Eigenschaften ein Fehlerradius der Positionsangabe ist und/oder daß das mindestens eine Attribut angibt, ob die Positionsangabe absolut oder relativ ist.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer Einrichtung zur erfindungsgemäßen Codierung und Decodierung,
- Fig. 2: eine schematische Darstellung des erfindungsgemäßen Verfahrens für punktförmige Objekte,
- Fig. 3: eine schematische Darstellung des erfindungsgemäßen Verfahrens für linienförmige Objekte,
- Fig. 4: eine schematische Darstellung des erfindungsgemäßen Verfahrens für flächenförmige Objekte,
- Fig. 5: eine schematische Darstellung eines erfindungsgemäßen Verfahrens für komplexe Objekte,
- Fig. 6: ein erstes Ausführungsbeispiel einer erfindungsgemäßen Ortscodierung,
- Fig. 7: eine schematische Darstellung zu Fig. 6,
- Fig. 8: ein zweites Ausführungsbeispiel einer erfindungsgemäßen Ortscodierung und
- Fig. 9: einen Ausschnitt aus einer digitalen Straßenkarte mit einem decodierten Objekt.

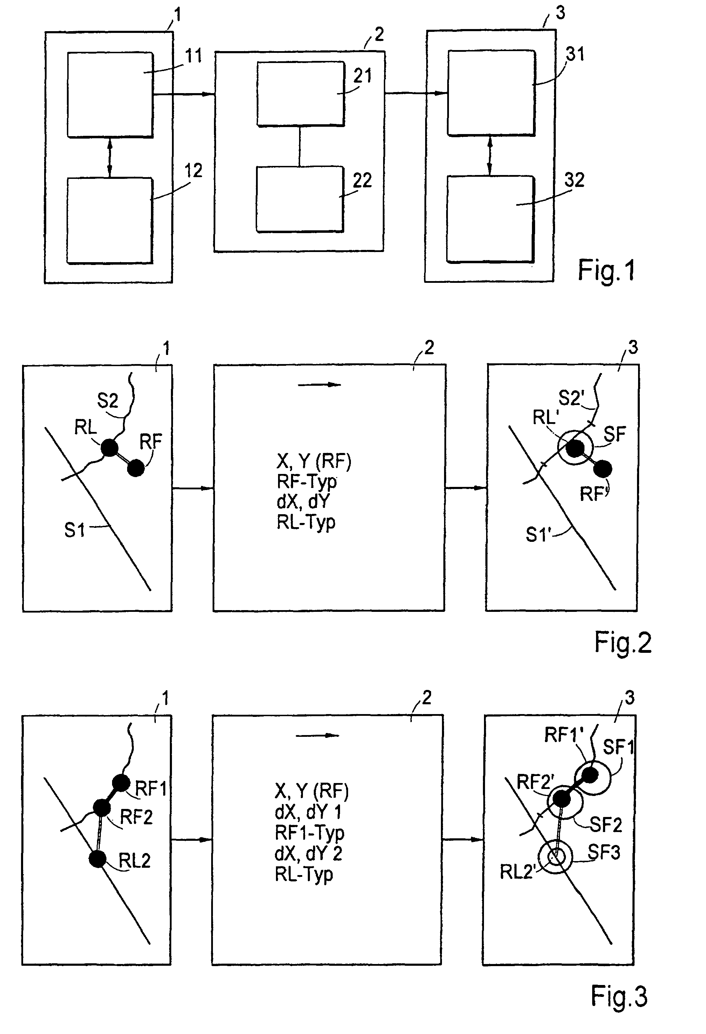

Die in Fig. 1 dargestellte Einrichtung besteht aus einem Sender 1, einem Übertragungssystem 2 und einem Empfänger 3. Das zu sendende Objekt 21 wird in einem Codierer 11 mit Ortsbezügen versehen. Sowohl das Objekt 21 selbst als auch die Ortsbezüge werden im Sender einer Objekt-Datenbank 12 entnommen, die beispielsweise eine TMC Ortsdatenbank ist. Im Codierer 11 wird mit Hilfe der Objektdaten aus der Objekt-Datenbank 12 eine Beschreibung 22 der Ortsbezüge des zu sendenden Objekts 21 erzeugt. Der Codierer 11 übergibt das Objekt und die Ortsbezüge an das Übertragungssystem 2. Im Empfänger 3 übernimmt ein Decodierer 31 das Objekt 21 und die Beschreibung 22 der Ortsbezüge. Der Decodierer vergleicht anhand der Beschreibung 22 der Ortsbezüge des Objekts 21 die Objekte in seiner Objekt-Datenbank 32. Findet der Decodierer 31 in der Objekt-Datenbank 32 ein Objekt mit einer Beschreibung der Ortsbezüge, die sehr ähnlich oder gleich der Beschreibung 22 ist, gilt das Objekt 21 in der Datenbank 32 als referenziert.

Findet der Decodierer 31 anhand der Suchbedingungen in der Beschreibung 22 in der Datenbank 32 kein Referenzobjekt mit ähnlicher oder gleicher Beschreibung, so gilt das Objekt 21 als in der Datenbank 32 nicht vorhanden.

Enthält die Beschreibung 22 der Ortsbezüge Relationsobjekte, die - im Gegensatz zu den Referenzobjekten - in der Datenbank 32 decodiert werden konnten, so soll das Objekt 21 mit Hilfe der Beschreibung 22 in die Datenbank 32 eingefügt werden. Die Beschreibung 22 enthält beispielsweise die in den Figuren 2 bis 5 zur Übertragung angegebenen Ortsbezüge.

Bei dem Ausführungsbeispiel nach Fig. 2 wird eine Referenzierung punktförmiger Objekte mit den nachfolgenden Elementen erzeugt:
- geographische Position des Referenzobjekts RF in X-, Y-Koordinaten, beispielsweise WGS84,
- Typ des Referenzobjekts,
- geographische Position des Relationsobjekts als Offset (Differenz-Koordinaten) zum Referenzobjekt nach einer definierten Berechnungsvorschrift;
- Typ des Relationsobjekts.
   Um Mehrdeutigkeiten bei der Dereferenzierung zu vermeiden, kann das Relationsobjekt als
- ein Element des Verkehrswegenetzes, beispielsweise Straßenabschnitt oder nicht digitalisierte Einfahrt, oder
- ein weiteres Referenzobjekt, das selbst mit den obengenannten Kriterien referenziert wird, beispielsweise P&R-Plätze mit Parkplatz und Haltestelle,
gewählt werden.

In Fig. 2 ist senderseitig als Beispiel ein Kartenausschnitt mit den beiden bereits genannten Objekten RF und RL sowie zwei Straßen S1 und S2 dargestellt.

Als Beispiel für die empfängerseitige Datenbank sind ebenfalls zwei Straßen S1 und S2 gewählt, wobei die Darstellung in stärker generalisierter Form erfolgt. Zur Ermittlung eines des Referenzobjekts entsprechenden Objekts in der Datenbank 32 (Fig. 1) des Empfängers 3 wird ein Suchfenster SF erzeugt, das dann zur Ermittlung eines Relationsobjekts RL' führt. Daran anschließend kann dann über den Offset dX, dY das Referenzobjekt RF' gefunden werden.

In diesem Fall konnte das Relationsobjekt RL gefunden, aber das Referenzobjekt RF nicht gefunden werden. Daher wird das Objekt RF als neues Objekt in der Datenbank 32 eingetragen. Wenn auch das Relationsobjekt RL nicht eindeutig gefunden worden wäre, so kann kein Objekt gefunden und eingetragen werden.

Fig. 3 zeigt ein Beispiel für eine Referenzierung eines linienförmigen Objekts, das sich zwischen zwei punktförmigen Objekten RF1 und RF2 erstreckt. Diese werden als Referenzobjekte einschließlich der Bezüge zu einem Relationsobjekt RL und den absoluten Koordinaten X, Y eines der Objekte zum Empfänger übertragen. Dort werden Suchfenster SF1, SF2 und SF3 gebildet, so daß in der Datenbank des Empfängers 3 ein Relationsobjekt RL2' und zwei Referenzobjekte RF1' und RF2' gefunden werden. Durch RF1' und RF2' ist dann auch die Decodierung des linienförmigen Referenzobjekts möglich.

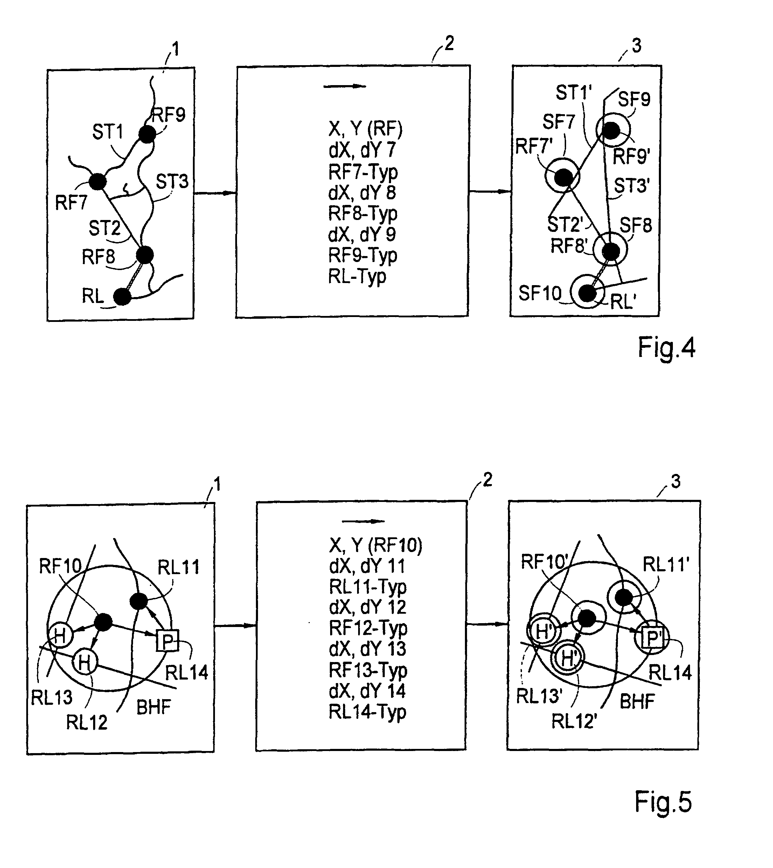

Basierend auf dem Verfahren für linienförmige Objekte werden flächenförmige Objekte über Punkt bzw. linienförmige Objekte gemäß Fig. 4 codiert und entsprechende Differenz-Ortskoordinaten angefügt. Für jede Differenz-Ortskoordinate wird zusätzlich ein Typ für das generierte bzw. betreffende Linien-Objekt angegeben. So sollen beispielsweise gemäß Fig. 4 Straßenabschnitte ST1, ST2 und ST3 codiert werden, um die von diesen eingerahmte Fläche zu übertragen. Dazu werden Schnittpunkte als Referenzobjekte RF7, RF8 und RF9 und ein Relationsobjekt RL ausgewählt. Übertragen werden die in Fig. 4 dargestellten Daten. Im Empfänger werden Suchfenster SF7 bis SF10 erzeugt. Innerhalb der Suchfenster werden dann die Referenzobjekte RF7' bis RF9' und das Relationsobjekt RL' gefunden. Dabei dient das Relationsobjekt RL' zur Kontrolle, um Mehrdeutigkeiten zu vermeiden und um eine Flächenbeschreibung als Objekt zu ermöglichen, falls RF7 bis RF9 nicht gefunden werden konnten, während die Referenzobjekte RF7' bis RF9' als Schnittpunkte für die Straßenabschnitte ST1', ST2' und ST3' dienen.

Als Beispiel für ein komplexes Objekt, das sich aus mehreren Teilobjekten mit beliebigem Funktionstyp zusammensetzt, ist in Fig. 5 ein Bahnhof BHF dargestellt, der eine kreisförmige Flächenausdehnung haben soll und sich aus Haltepunkten H verschiedener Liniennetze und einem P&R-Platz P zusammensetzt. Die Haltepunkte H und der Parkplatz P dienen dabei als Relationsobjekte RL12, RL13, RL14, während ein Referenzobjekt RF10 den Bahnhof als solches kennzeichnet. Ein weiteres Relationsobjekt RL11 ist dem Relationsobjekt RL14 untergeordnet. Nach der Übertragung der bei 2 dargestellten Daten werden wiederum Suchfenster erzeugt, in denen die entsprechenden Objekte RL12', RL13', RL14', RF10' und RL11' gefunden werden.

Diese Form der Übertragung von Relationsobjekten kann weiterhin vorteilhaft genutzt werden, wenn der Sender dem Empfänger beispielsweise die Relationsobjekte H und P übermittelt, damit der Empfänger seinerseits diese Relationsobjekte als Referenzobjekte als Sender an einen weiteren Empfänger zur Decodierung übersenden kann. Diese Relationsobjekte stellen dann referenzierbare Übergangsobjekte zwischen verschiedenen Objektdatenbanken dar (z.B. Straßennetz und Liniennetz des öffentlichen Verkehrs).

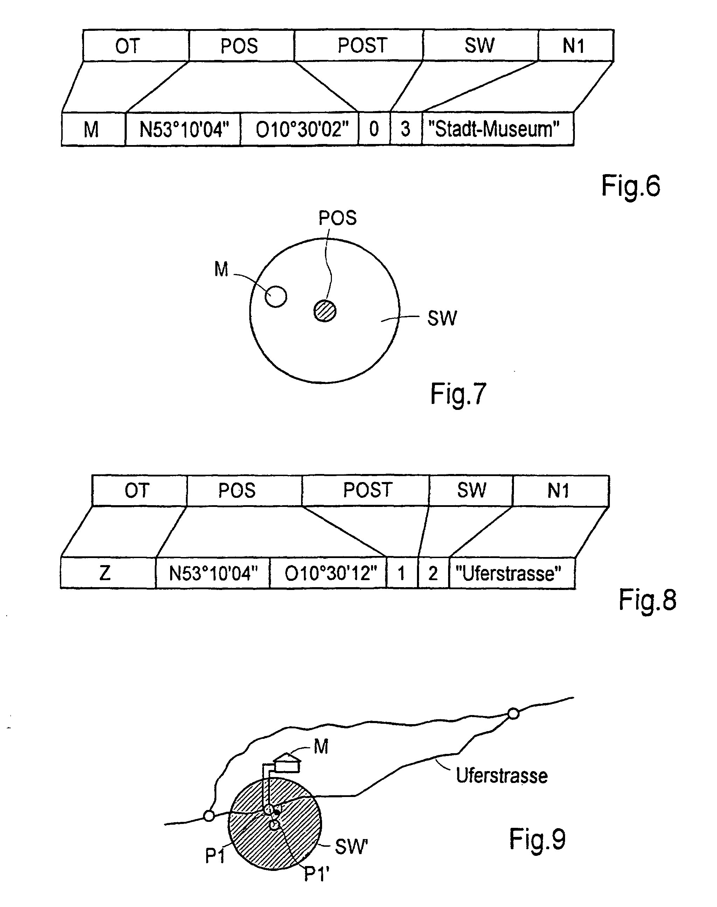

Fig. 6 zeigt ein Beispiel für eine Ortscodierung - im folgenden auch Ortsbeschreibung genannt -, dessen Datenfelder folgende Informationen enthalten. Das Datenfeld OT (= Objekttyp) enthält bei dem Beispiel ein Museum M. Die Positionsangabe POS enthält geographische Längen- und Breitengrade. Im Falle des Beispiels in Fig. 6 enthält das Datenfeld Positionstyp POST eine 0, was bedeutet, daß diese Ortskoordinaten sich nur in der Nähe eines Objekts befinden bzw. daß die Koordinaten nicht navigierbar sind. Ferner wird die Weite eines Suchfensters SW angegeben, im Beispiel "3", was bedeutet, daß das Objekt sich in einem Umkreis von 10³m um die Ortskoordinaten im Datenfeld POS befindet. Schließlich ist im Datenfeld N1 ein signifikanter Name des Museums angegeben - in diesem Beispiel "Stadt-Museum".

Fig. 7 zeigt die übertragene Position POS einschließlich des Suchfensters SW und des codierten Ortes M, sowie er in dem Empfänger durch die Suche im Suchfenster gefunden wurde.

Ein weiteres Ausführungsbeispiel einer erfindungsgemäßen Ortsbeschreibung ist in Fig. 8 dargestellt, bei welcher der Objekttyp eine Zufahrt Z zu einem Museum M ist. Dabei ist zum Unterschied zu Fig. 6 im Datenfeld Positionstyp POST eine 1 eingetragen, was bedeutet, daß die Ortskoordinaten navigierbar sind. Als Weite des Suchfensters ist eine 2 eingetragen. Als Bezeichnung für den POI enthält die Ortsbeschreibung nach Fig. 8 den Begriff "Uferstraße" -d.h., das Objekt "Zufahrt" zweigt von der Uferstraße ab.

Fig. 9 zeigt einen Ausschnitt aus einer digitalen Straßenkarte, bei der ein Museum M codiert ist. Eine im Datenfeld POS übertragene Position P1' bildet den Mittelpunkt eines Suchfensters SW'. P1 stellt die gefundene Abzweigung einer Zufahrt zum Museum M dar und wird durch Fällen des Lotes von P1' auf das gefundene Objekt "Uferstrasse" ermittelt. Museum und Zufahrt zum Museum haben eine Beziehung zueinander, die beispielsweise über die beschriebene Referenz/Relationsobjekt-Datenstruktur codiert und decodiert werden kann.

## Patentansprüche

1. Verfahren zur Codierung von Objekten mit Bezug auf ein Verkehrswegenetz, wobei die codierten Informationen auch mit Hilfe von Datenbanken decodierbar sind, die von einer bei der Codierung benutzten Datenbank abweichen, **dadurch gekennzeichnet, dass** die Objekte mit Beziehungen zu mindestens einem Relationsobjekt versehen werden, welches in Datenbanken, die zur Decodierung dienen, vorhanden ist, wobei sich die Beziehungen nicht primär aus dem Verkehrswegenetz ergeben, sondern anhand von Attributen, ohne auf die durch das Verkehrswegenetz gegebenen Beziehungen und damit auf die Struktur einer Vergleichsdatenbank angewiesen zu sein und dass Beziehungen parallel und/oder hierarchisch zu mehreren Relationsobjekten angegeben werden.

2. Verfahren nach Anspruch 1, **dadurch gekennzeichnet, dass** die Beziehungen örtliche Angaben sind.

3. Verfahren nach Anspruch 1 oder 2, **dadurch gekennzeichnet, dass** die Beziehungen logische Merkmale, insbesondere Zugehörigkeiten, umfassen.

4. Verfahren nach einem der vorhergehenden Ansprüche, **dadurch gekennzeichnet, dass** die jeweils für ein Objekt (Referenzobjekt) codierte Information folgende
Datenstruktur aufweist:
<Referenzobjekt>
<Relationsobjekt 1>
<Relationsobjekt 11>
<Relationsobjekt 12>
...
<Relafionsobjekt 2>
...
<Relationsobjekt N>, wobei mindestens das Referenzobjekt und ein Relationsobjekt vorliegen.

5. Verfahren nach Anspruch 4, **dadurch gekennzeichnet, dass** die Datenstruktur codiert wird:
<Referenz-/Retationsobjekt>:=
<Ebene>
<Objekttyp>
<Objektkoordinaten>
<Objektende>.

6. Verfahren nach Anspruch 5, **dadurch gekennzeichnet, dass** die Datenstruktur durch weitere Informationen, insbesondere für die Ausgabe des Objekts, ergänzt wird.

7. Verfahren nach einem der Ansprüche 4 bis 6, **dadurch gekennzeichnet, dass** mindestens den Daten des Referenzobjekts Daten zugeordnet sind, die eine Decodierungsregel kennzeichnen und dass den Daten der Relationsobjekte bei Bedarf jeweils Daten zugeordnet sind, die eine Decodierungsregel kennzeichnen.

8. Verfahren zur Decodierung von mit dem Verfahren nach einem der vorhergehenden Ansprüche codierten Objekten, mit folgenden Schritten:
- das mindestens eine Relationsobjekt wird in der zur Decodierung dienenden Datenbank gesucht und daraufhin die Beziehung zum zu decodierenden Objekt ausgewertet,
- das mindestens eine Relationsobjekt wird in mindestens einer weiteren Datenbank gesucht, wenn es in der an sich zur Decodierung dienenden Datenbank nicht gefunden wird.

9. Verfahren nach Anspruch 8, **dadurch gekennzeichnet, dass** um die Orte der Relationsobjekte und der Referenzobjekte Suchfenster geöffnet werden.

10. Verfahren zur Codierung von Objekten mit Bezug auf ein Verkehrswegenetz, wobei die codierten Informationen auch mit Hilfe von Datenbanken decodierbar sind, die von einer bei der Codierung benutzten Datenbank abweichen, wobei die Codierung mindestens eine Positionsangabe umfasst, **dadurch gekennzeichnet, dass** die mindestens eine Positionsangabe mit einem Positionstypbezeichner versehen wird, wobei der Positionstypbezeichner angibt, ob die Positionsangabe eine exakte Position betrifft und/oder die Lage eines Suchraumes für eine Position oder ein Objekt angibt.

11. Verfahren nach Anspruch 10, **dadurch gekennzeichnet, dass** der Positionstypbezeichner für jeweils eine Positionsangabe gilt.

12. Verfahren nach Anspruch 10, **dadurch gekennzeichnet, dass** der Positionstypbezeichner für mehrere Positionsangaben gilt.

13. Verfahren nach einem der Ansprüche 10 bis 12, **dadurch gekennzeichnet, dass** der Positionstypbezeichner mindestens ein Attribut aufweist, das weitere Eigenschaften der Positionsangabe bezeichnet.

14. Verfahren nach Anspruch 13, **dadurch gekennzeichnet, dass** die weiteren Eigenschaften ein Fehlerradius der Positionsangabe ist.

15. Verfahren nach Anspruch 13, **dadurch gekennzeichnet, dass** das mindestens eine Attribut angibt, ob die Positionsangabe absolut oder relativ ist.

## Claims

1. Method for encoding objects with reference to a traffic route network, it being also possible to decode the encoded information using databases which differ from a database used during the encoding, **characterized in that** the objects are provided with relationships with at least one relational object which is present in databases which are used for the decoding, the relationships not being obtained primarily from the traffic route network but from attributes, without having to rely on the relationships specified by the traffic route network and thus on the structure of a comparison database and **in that** relationships are specified with a plurality of relational objects in parallel and/or hierarchically.

2. Method according to Claim 1, **characterized in that** the relationships are local data.

3. Method according to Claim 1 or 2, **characterized in that** the relationships comprise logical features, in particular associations.

4. Method according to one of the preceding claims, **characterized in that** the information which is respectively encoded for an object (reference object) has the following data structure:
<reference object>
<relational object 1>
<relational object 11>
<relational object 12>
. . .
<relational object 2>
. . .
<relational object N>, at least the reference object and one relational object being present.

5. Method according to Claim 4, **characterized in that** the data structure is encoded:
<reference/relational object>:=
<level>
<object type>
<object coordinates>
<object end>.

6. Method according to Claim 5, **characterized in that** the data structure is supplemented by means of further information, in particular for outputting the object.

7. Method according to one of Claims 4 to 6, **characterized in that** at least the data of the reference object is assigned data which characterizes a decoding rule, and **in that** the data of the relational objects is, where necessary, respectively assigned data which characterizes a decoding rule.

8. Method for decoding objects which are encoded with the method according to one of the preceding claims, with the following steps:
- the at least one relational object is searched for in the database which is used for decoding, and the relationship with the object to be decoded is subsequently evaluated,
- the at least one relational object is searched for in at least one further database if it is not found in the database which is actually being used for the decoding.

9. Method according to Claim 8, **characterized in that** search windows are opened around the locations of the relational objects and of the reference objects.

10. Method for encoding objects with reference to a traffic route network, it being also possible to decode the encoded information using databases which differ from a database used during the encoding, the encoding comprising at least one position data item, **characterized in that** the at least one position data item is provided with a position type designator in which the position designator specifies whether the position data item relates to a precise position and/or specifies the position of a search space for a position or an object.

11. Method according to Claim 10, **characterized in that** the position type designator applies to one position data item in each case.

12. Method according to Claim 10 **characterized in that** the position type designator applies to a plurality of position data items.

13. Method according to one of Claims 10 to 12, **characterized in that** the position type designator has at least one attribute which designates further properties of the position data item.

14. Method according to Claim 13, **characterized in that** the further properties is an error radius of the position data item.

15. Method according to Claim 13, **characterized in that** the at least one attribute specifies whether the position data item is absolute or relative.

## Revendications

1. Procédé de codage d'objets en référence à un réseau routier, les informations codées pouvant aussi être décodées à l'aide de bases de données qui se différencient d'une base de données utilisée lors du codage,
**caractérisé en ce que**
les objets sont dotés de rapports à au moins un objet rationnel disponible dans les bases de données servant au décodage, les rapports ne résultant pas en premier lieu du réseau routier, mais étant déterminés à l'aide d'attributs sans renvoyer aux rapports donnés par le réseau routier et donc à la structure d'une base de données de comparaison, et des rapports sont indiqués parallèlement et/ou hiérarchiquement par rapport à plusieurs objets rationnels.

2. Procédé selon la revendication 1,
**caractérisé en ce que**
les rapports sont des indications locales.

3. Procédé selon la revendication 1 ou 2,
**caractérisé en ce que**
les rapports comprennent des caractéristiques logiques et notamment des appartenances.

4. Procédé selon l'une quelconque des revendications précédentes,
**caractérisé en ce que**
l'information codée à chaque fois pour un objet (objet de référence) comporte la structure de données suivante :
<objet de référence>
<objet rationnel 1>
<objet rationnel 11>
<objet rationnel 12>
...
<objet rationnel 2>
...
<objet rationnel N>, avec au moins l'objet de référence et un objet rationnel.

5. Procédé selon la revendication 4,
**caractérisé en ce que**
la structure de données est codée :
<objet de référence/rationnel> :
<plan>
<type d'objet>
<coordonnées de l'objet>
<fin de l'objet>

6. Procédé selon la revendication 5,
**caractérisé en ce que**
la structure de données est complétée par d'autres informations, notamment pour la sortie de l'objet.

7. Procédé selon l'une quelconque des revendications 4 à 6,
**caractérisé en ce que**
des données caractérisant une règle de décodage sont attribuées au moins aux données de l'objet de référence, et des données caractérisant une règle de décodage sont attribuées si nécessaire aux données correspondantes des objets rationnels.

8. Procédé de décodage des objets codés selon le procédé décrit dans l'une quelconque des revendications précédentes, avec les étapes suivantes :
- au moins un objet rationnel est cherché dans la base de données servant au décodage, puis le rapport à l'objet à décoder est évalué,
- au moins un objet rationnel est cherché dans au moins une autre base de données lorsqu'il n'a pas été trouvé dans la base de données servant spécifiquement au décodage.

9. Procédé selon la revendication 8,
**caractérisé en ce que**
des fenêtres de recherche sont ouvertes autour des emplacements des objets rationnels et de référence.

10. Procédé de codage d'objets en référence à un réseau routier, les informations codées pouvant aussi être décodées à l'aide de bases de données qui se différencient d'une base de données utilisée lors du codage, le codage comprenant au moins une donnée de position,
**caractérisé en ce qu'**
au moins une donnée de position est dotée d'un indicateur du type de position, l'indicateur du type de position indiquant si la donnée de position concerne une position exacte et/ou la situation d'un espace de recherche pour une position ou un objet.

11. Procédé selon la revendication 10,
**caractérisé en ce que**
l'indicateur du type de position est valable respectivement pour une donnée de position.

12. Procédé selon la revendication 10,
**caractérisé en ce que**
l'indicateur du type de position est valable pour plusieurs données de position.

13. Procédé selon l'une quelconque des revendications 10 à 12,
**caractérisé en ce que**
l'indicateur du type de position comporte au moins un attribut qui décrit d'autres propriétés de la donnée de position.

14. Procédé selon la revendication 13,
**caractérisé en ce que**
les autres propriétés sont un rayon d'erreur de la donnée de position.

15. Procédé selon la revendication 13,
**caractérisé en ce qu'**
au moins un attribut indique si la donnée de position est absolue ou relative.
